# EUROPEAN PATENT APPLICATION

(11) **EP 1 845 504 A2**
(43) Date of publication of application: **17.10.2007**
(21) Application number: 06254353.3
(22) Date of filing: 18.08.2006
(51) Int. Cl.: G09F 1/10, G09F 11/23

(54) **Selective message displayer with a memo clip**

(30) Priority: 31.03.2006 US 278359
(71) Applicant: Cotapaxi Custom Design and Manufacturing, LLC, Carlstadt NJ 07072 (US)
(72) Inventor: Cetera, Carl c/o Cotapaxi Custom Design &, Carlstadt NJ 07072 (US)
(74) Representative: Wilson Gunn

(57) **Abstract**

An apparatus that can selectively display prearranged messages that may be erasable and rewritable or spaces for posting messages, and at the same time, function as a clip to retain pieces of papers or other suitable objects. The apparatus comprises a platform that again comprises a bottom layer, a message layer, and a covering layer which are configured and integrated to move relative to one another so that the messages on the message layer can be selectively displayed through a window on the covering layer. The apparatus further comprises a plate which are pivotally connected to the bottom of the platform wherein a spring-like member is used to force only part of an platform bottom edge to contact against the plate so as to form a clip between the platform bottom and the plate.

## Description

The present invention relates to field of message displayers and more specifically to message displayers having memo clips attached thereto.

A door sign is typically used on a door, wall adjacent to the door, or other flat surfaces of hotel guestrooms, business offices, government or public offices, hospital patient rooms, or even private homes for the purpose of informing visitors of whether the room's occupant is in, his or her whereabouts, when he or she will be available, or other messages the room's occupant wishes to be conveyed to visitors.

Most typical door signs, however, permit the conveyance of messages only from the occupant of the room to visitors. In everyday life, there are many occasions when visitors may wish to leave or respond to the message they just read from the door sign, or even leave some documents or things for the absent occupant. Sometimes, the occupant of the room may wish to leave documents to expected visitors when he or she is expected to be absent or unavailable. But typical door signs are not capable of retaining memos or documents left from visitors. In many cases, visitors are forced to just push memos or documents under the locked door if it is possible. But many visitors would confess common experience of feeling somewhat uncomfortable or insecure about this way of leaving message because the room's occupant may, upon entrance, inadvertently step on the memos or documents on the floor to defile or damage them, or even may not timely notice their presence. Inability to find a suitable sheet of paper or some writing instruments nearby for leaving messages in many cases is another problem. Some of these problems can be overcome by using a message board equipped with blank memo papers, pens, and clips or pins to fix the papers on the board. However, such message boards are typically not sized for use on a door and most of them do not permit documents or things to be securely left for the recipient. Also, most message boards do not typically allow selective displaying of more than two preset messages like a door sign.

Therefore, it would be highly desirable to provide an apparatus that can perform the important functions mentioned above, i.e., as a convenient way of allowing bilateral communication between the room's occupant and visitors, using a number of pre-designated messages and/or space to write new unique messages, and a means of securely retaining documents or things for an intended recipient.

It would further be desirable to provide an apparatus that is structurally and functionally integrated, and thus would look neat and compact when attached on a door or wall, while performing both functions aforementioned.

It is an object of the present invention to provide an apparatus that a user can easily manipulate to selectively display, prearranged messages wherein the messages can be easily replaced with other pre-written messages or erased and rewritten.

It is another object of this invention to provide at the same time, through the same apparatus, a mechanism that can detachably retain or hold, like a "clip", sheets of papers or other objects.

It is yet another object of the present invention to provide an apparatus that is structurally and functionally integrated to look neat and compact when attached on a door or wall while performing the functions that meet aforementioned objects.

Still another object of this invention is to provide a method of advertising and promotion using the outer surfaces of the apparatus in the present invention.

The objects of this invention is accomplished by an apparatus that is largely composed of a message displaying platform that can selectively display preprinted messages or space for writing new short messages and a plate which is pivotally connected to the platform, forming virtually a "clip" together with the bottom of the platform to hold or retain sheets of paper or other things.

More specifically, the message displaying platform includes a bottom layer, a message layer, and a covering layer, which are of comparable size and shape to one another, al of which are detachably assembled. The message layer has a set of prearranged messages or empty spaces for posting messages on it either imprinted or rendered erasable so that new messages can be written. The covering layer has a window. When the bottom layer, the message layer, and the covering layer are integrated, either the message layer or the covering layer is rendered movable with respect to the other two which remain fixed in the meanwhile so that the messages or spaces on the message layer may be selectively displayed through the window on the covering layer by their relative motion. For example, in one embodiment the message layer rotates while the covering layer and the bottom layer remain fixed, and in another, the covering layer rotates while the message layer and the bottom layer remain fixed. The rotation of the message layer or covering layer can be facilitated by the use of a knob, dial, handle, or the like which are protruded out from the platform, and attached preferably either at the central area of the message layer or covering layer in some embodiments, or at the outer rim of the message layer or covering layer in other embodiments.

The object of providing "clipping" function is accomplished by a plate which is pivotally connected to the bottom of the platform to let the platform to rotate to some degree about the pivotal point, and by a spring-like member located near the pivotal point which forces only one edge of the platform to contact against the plate so as to form a "clip" between them. The "clip" which normally remains closed due to the spring force of the aforementioned member can be easily opened to hold or release objects by pressing somewhere on the covering layer of the platform located generally opposite to the clip.

The object of providing a method of advertising and promotion is also accomplished by imprinting advertising or graphic materials on either the covering layer, the message layer, or the plate that can be sized and configured to extend sufficiently beyond the platform to provide an area for advertisement.

The preferred embodiment of the present invention, representing the best mode contemplated, is illustrated in the accompanying drawings in which
FIG. 1 is a perspective view of a message displaying platform with a clip-forming backing plate, made according to the present invention;
FIG. 2 is a top plan view of a message displaying platform with a clip-forming backing plate being manipulated in an exemplary manner according to the present invention;
FIG. 3 is a perspective exploded view of a message displaying platform made according to the present invention;
FIG. 4 is a bottom plan view of the clip-forming backing plate;
FIG. 5 is a side elevational view of a message displaying platform with a clip-forming backing plate, made according to the present invention;
FIG. 6 is a top plan view of a message displaying platform with a clip-forming backing plate being installed in an exemplary manner according to the present invention.

The present invention generally relates to an apparatus that provides means for selectively displaying prearranged messages like a common door sign, and at the same time for retaining memos, documents, or other objects.

The preferred embodiment of the present invention will now be described with reference to figures(FIGS.) 1-6, wherein like components are designated by like reference numerals throughout the various figures. Although the invention is generally described in the context of the preferred embodiment, it should be understood that it is shown and described, only by way of illustration of the best mode contemplated of carrying out the invention, but not intended to limit in any way the spirit and scope of the invention to this particular embodiment.

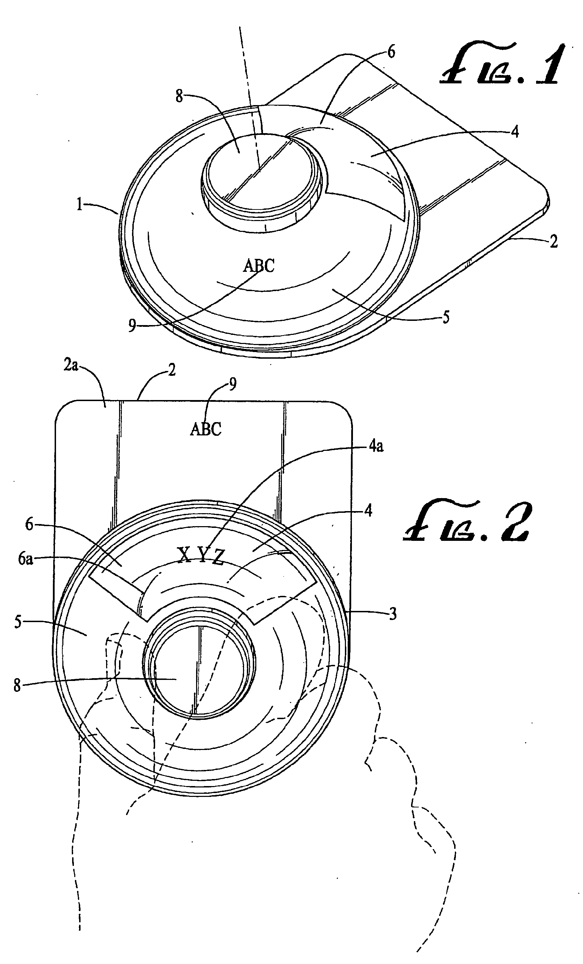

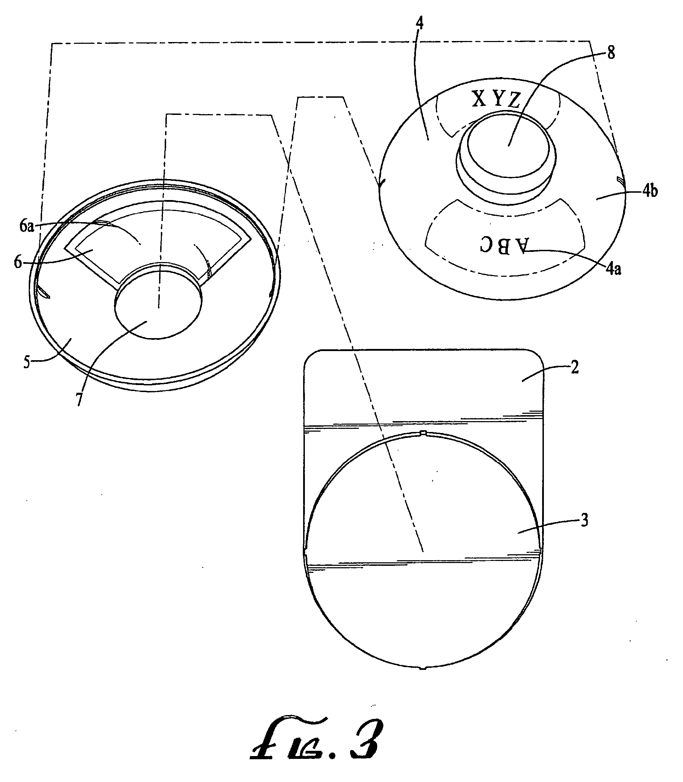

FIGS. 1 and 2 show the general overview of the preferred embodiment of the present invention, which comprises largely two parts, a message displaying platform 1 and a backing plate 2. The platform 1 plays the role of a conventional door sign, to display a preprinted messages or message spaces selectively, and the backing plate 2, pivotally connected to the platform 1, forms a "clip" together with the bottom of the platform 1 to hold or retain sheets of paper or other things.

More specifically, the message displaying platform 1 comprises a bottom layer 3, a message layer 4, and a covering layer 5. The bottom layer 3 and message layer 4 are not shown in FIG. 1 and 2 as both of them are hidden, being covered by the covering layer 5.

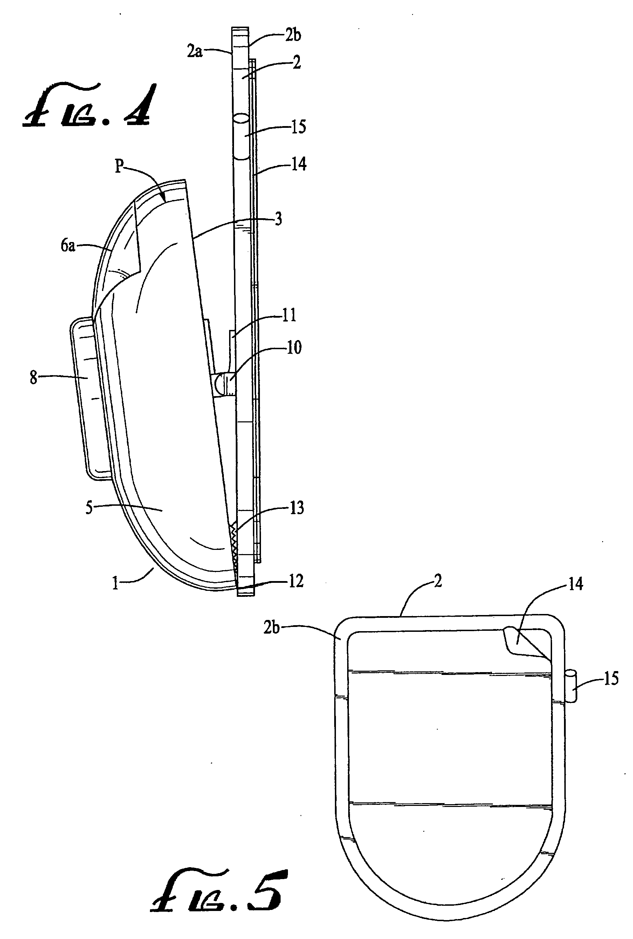

FIG. 3 fully describes the inner structure of the preferred embodiment of the platform 1. The bottom layer 3 forms the bottom surface of the platform 1, and could be generally of the size of a typical door sign. The message layer 4, generally of comparable size and configuration with the bottom layer 3, is mounted on the bottom layer 3, and covered by the covering layer 5. Preferably but not necessarily, the covering layer 5 is sized and configured to cover both of the message layer 4 and the bottom layer 3 so as to give the platform 1, when combined, an integrated appearance as in FIGS. 1 and 2. Although the bottom layer 3, the message layer 4, and the covering layer 5 are depicted as taking circular shapes in the preferred embodiment in FIGS. 1-4, they may take any other shapes as suited to the aesthetic taste of the user, including but not limited to circular, oval, square, rectangular, pentagonal, or hexagonal configuration.

Again referring to FIG. 3, the covering layer 5, which practically forms the upper outer surface of the platform 1 in the preferred embodiment as shown in FIG. 1, 2, and 4, has a displaying window 6, suitably sized and configured to display messages disposed on the underlying message layer 4. The displaying window 6 may be open or covered by a transparent cover 6a to protect the messages below against wear-off. The message layer 4 has a plurality of different preprinted messages 4a disposed on its upper surface with suitable intervals from one another. The messages 4a may be separated by empty spaces 4b which are large enough to allow users to write other messages on them. The messages 4a may be permanently imprinted, or made erasable and rewrittable.

In one embodiment, the message layer 4 and the covering layer 5 are mounted over and connected with the bottom layer 3 consecutively in such a way that the message layer 4 is movable, rotationally or translationally, relative to covering layer 5 and the bottom layer 3 while the latter two are stuck together. The typical means or structure for achieving such an end will be readily recognized by those skilled in the art, and thus not provided here.

In the preferred embodiment as depicted in FIG. 3, the message layer 4 is rotatable such that the messages 4a or spaces 4b on it can be selectively displayed through the displaying window 6 or transparent cover 6a as the message layer 4 rotates. There could be several mechanisms for rotating the message layer 4. As shown in the preferred embodiment in FIG. 3, the message layer 4 may further have a protrusion 8 formed near its central portion in the direction perpendicular to its face preferably in a shape of dial, and the covering layer 5 may further have an opening 7 near its cental portion to fit the protrusion 8 in and let it protruded outwardly from the platform 1. Then, the message layer 4 can be rotated by rotating or twisting the protrusion 8 from outside the platform 1 as depicted in FIG. 2 such that messages 4a or spaces 4b are selectively displayed through the fixed window 6 or transparent cover 6a. Or in another embodiment, the protrusion 8 can be formed on the outer rim of the message layer 4 in the shape of, for example, a small handle extended in the direction either perpendicular to the face of the message layer 4 or parallel to, but radially outward from the face such that the protrusion 8 sticks out of the platform 1 so that the message layer 4 may be rotated by manipulating it.

In another embodiment on the other hand, the covering layer 5 may be made movable, rotationally or translationally, relative to the message layer 4 and the bottom layer 3 while the latter two are stuck together. In this case, the displaying window 6 on the covering layer 5 itself moves with respect to the fixed message layer 4 to selectively display the messages 4a or spaces 4b. Again, there could be several mechanisms, for example, for rotating the covering layer 5. In a similar way as in the preferred embodiments, a circular protrusion may be formed near the center of the covering layer 5 such that it can be rotated by turning the protrusion. In fact, FIG. 1-2 may be viewed to represent two different embodiments, the preferred embodiment as described in FIG. 3 where a circular protrusion is formed at the center of the message layer 4 and another embodiment where the circular protrusion is formed at the center of the covering layer 5. In yet another embodiment, a circular or handle-shaped protrusion may be formed on the outer rim of the covering layer 5 such that by manipulating it, the covering layer 5 may be rotated.

Preferably, all of the bottom layer 3, message layer 4, and covering layer 5 are rendered detachable from one another as in FIG. 3 such that the message layer 4 may be easily taken out of the platform 1 for replacing it with another message layer carrying different pre-imprinted messages or for erasing and rewriting new messages on it. But where there are no such needs, the bottom layer 3 and covering layer 5 may be made undetachable while including in between the message layer 4 to form a closed shell.

Now referring back to FIGS. 1 and 2, depicting the overview of the preferred embodiment, both figures show the platform 1 in an integrated form with elements described above, such as backing plate 2, covering layer 5, message layer 4 partly displayed through the transparent cover 6a with the messages 4a, and the circular protrusion 8 which could be viewed as attached either on the message layer 4 hidden below the covering layer 5, or on the covering layer 5. FIG. 2 specifically demonstrates how the protrusion 8 is manipulated to rotate either the message layer 4 or the covering layer 5.

The present invention can be also used as a means for effective advertisement or promotion in addition to the stated objectives. An advertising or graphic material 9 may be placed on the surface of the covering layer 5 as shown in FIG. 1, or on the front surface 2a of the backing plate 2 as shown in FIG. 2. The advertising or graphic material 9 includes but not limited to, a logo, trademark, advertisement, emblem, label, stamp, feature, brand, insignia, crest, token, seal, decal, pitch, announcement, slogan, and monogram. Also, such indicia need not be limited to letters or words, but can be also a photo, design, or other pictorial representation. To secure a bigger area for advertisement or promotion, the backing plate 2 may be sized, configured, and oriented to render a top portion of the front surface 2a to be of at least the size of the platform and unobstructed by and extended beyond the platform 1 such that the advertising or graphic material 9 may be placed upon that top portion.

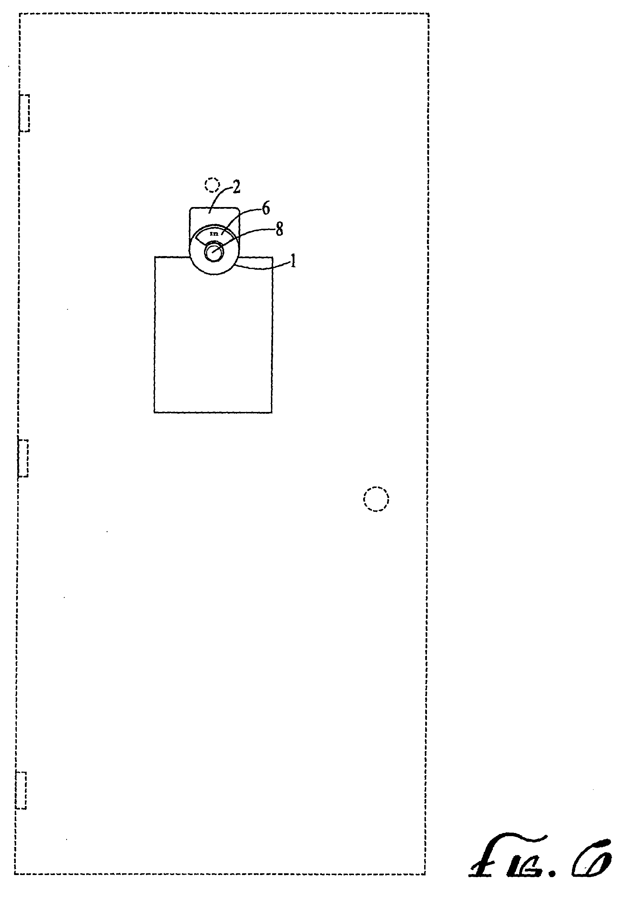

Now referring to FIG. 4, it describes the structure of the preferred embodiment that enables the second major function of the present invention, i.e., providing a means for retaining sheets of paper or other objects like a "clip". More specifically, it shows how the platform 1 previously defined is connected to the backing plate 2 to perform such a function. In FIG. 4, the backing plate 2 is pivotally connected to the bottom layer 3 of the platform 1 via a connecting member 10 such that the platform 1 may be given some rotational degree of freedom on the backing plate 2 about the pivotal point. What particular kind of hardware can be used for the connecting member 10 to effect such pivotal connection will be apparent to those skilled in the art. A pivot or fulcrum is just one candidate. The pivotal connection may be made between, preferably, the center of the bottom layer 3 of the platform 1 as shown in FIG. 4 for the preferred embodiment and some point near the central portion of the front surface 2b of the backing plate 2.

Further, in order to have the bottom layer 3 and backing plate 2 function like a "clip", a resilient tension member 11 is placed near, preferably within, the connecting member 10 between the bottom layer 3 and backing plate 2 as shown in FIG. 4. The tension member 11 exerts typical spring force on the bottom layer 3 of the platform 1 such that without external perturbation, only a portion of one edge of the bottom layer 3 is forced to contact against the front surface 2a of the backing plate 2, forming in between closed clipping jaws 12 for holding pieces of paper or other objects. The location of the clipping jaws 12 on the front surface 2a could be anywhere on it, not necessarily near its edge as shown in FIG. 4 which is for the preferred embodiment. The clipping jaws 12 can be opened to release the sheets of paper or objects if any external force counteracting the aforementioned spring force is applied to the platform 1, for example, by pressing the point "P" in FIG. 4 on the covering layer 5 toward the backing plate 2. What specific hardware can be employed for the tension member 11 to perform such a function as described above will also be readily recognized by those skilled in the art. Moreover, for securer retainment of papers or objects between the clipping jaws 12, a gripping member 13, such as clipping teeth or the like, may be further formed on each of the bottom layer 3 and the front surface 2a, adjacent to or right at the clipping jaws 12.

For a practical use, the present invention which comprises basically the platform 1 and backing plate 2 needs to be removably attached on an exterior surface such as a door or wall. For that purpose, the backing plate 2 may further have a removable attachment member 14 on the rear surface 2b of the backing plate 2 as shown in FIGS. 4 and 5. The attachment member 14 may be chosen from adhesives, magnetic material, suction cups, or conventional fasteners such as machine screws, machine threads, snap rings, hose clamps, rivets, nuts and bolts, toggles, hooks with loop fasteners, pins and the like.

Further, in order to provide the user with the means to write, the backing plate 2 may further have at least one retainment member 15 for holding writing instruments such as pens or pencils, which may be attached either on the front surface 2a, on the side surface of the backing plate 2 as shown in FIGS. 4 and 5, or on both. The retainment member 15 may be, for example, a small pocket or ring to fit the writing instrument in, or take any other form that those skilled in the art can readily recognize.

Finally, FIG. 6 shows one setting in which the preferred embodiment of present invention is used. There, the present invention is attached on a door such that prearranged messages are selectively displayed through the displaying window 6 via the protrusion 8 and a piece of paper is held by the "clip" formed via the bottom of the platform 1 and the backing plate 2 as described above.

The present invention is capable of other and different embodiments, and its several details are capable of modifications in various respects apparent to those of ordinary skill in the art, all without departing from the essential spirit or attributes of the invention. Therefore, it is desired that the embodiments described hereinbefore be considered in all respects only as illustrative, but not as restrictive.

## Claims

1. An apparatus for selectively displaying messages and removably retaining objects, the apparatus comprising:
a. a message displaying platform, said platform comprising:
a bottom layer;
a message layer mounted on said bottom layer, said message layer having a plurality of messages or spaces for posting messages disposed thereon; and
a covering layer defining a displaying window thereon, said covering layer sized and configured to cover said message layer and mounted over said message layer such that said covering layer and message layer are selectively positionable relative to each other whereby one of said plurality of messages or spaces are selectively displayed through said displaying window;
b. a backing plate having a front surface and a rear surface opposed to said front surface, said front surface being pivotally connected to said bottom layer of said platform by a connecting member; and
c. a resilient tension member disposed within said connecting member such that said tension member exerts force causing only one portion of edges of said bottom layer of said platform to contact against said front surface of said backing plate defining closed clipping jaws there between to retain sheets of paper or other objects, and said platform is disengageable from said front surface of said backing plate to define open clipping jaws so that said objects are released when pressure counteracting said force is applied to said platform.

2. The apparatus as in Claim 1, wherein said covering layer, message layer, and bottom layer are detachable from one another.

3. The apparatus as in Claim 2, wherein adjacent said clipping jaws, said bottom layer further comprises a first gripping member thereon and said backing plate further comprises a second gripping member on said front surface for tighter retaining of objects there between.

4. The apparatus as in Claim 3, wherein said backing plate further comprises an attachment member formed on said rear surface for removably attaching the apparatus to an exterior surface such as a door or wall.

5. The apparatus as in Claim 4, wherein said covering layer is rotatable relative to said message plate and bottom layer about a common axis extending through the centers of said covering layer, message layer, and bottom layer respectively.

6. The apparatus as in Claim 5, wherein said covering layer further has a protrusion thereon whereby said covering layer can rotate via said protrusion to selectively display said plurality of messages or spaces through said window.

7. The apparatus as in Claim 6, wherein each of said message layer, covering layer, and bottom layers has a generally circular configuration.

8. The apparatus as in Claim 7, wherein said protrusion is formed on the center of said covering layer.

9. The apparatus as in Claim 8, wherein said protrusion is formed in the shape of a dial.

10. The apparatus as in Claim 9, wherein said protrusion is formed in the vicinity of an edge of said covering layer.

11. The apparatus as in Claim 4, wherein said message is rotatable relative to said covering and bottom layers about a common axis extending through the centers of said covering layer, message layer, and bottom layer respectively.

12. The apparatus as in Claim 11, wherein each of said message layer, covering layer, and bottom layers has a generally circular configuration.

13. The apparatus as in Claim 12, wherein said message layer further has a protrusion formed on the center thereof, and said covering layer further defines an opening in the center thereof such that said protrusion extends axially through said opening and protrudes outwardly from said covering layer, whereby said message layer can rotate via said protrusion to selectively display said plurality of messages or spaces through said displaying window.

14. The apparatus as in Claim 13, wherein said protrusion is formed in the shape of a dial.

15. The apparatus as in Claim 14, where in said displaying window is covered by a transparent cover.

16. The apparatus as in Claim 15, wherein advertising or graphical material is imprinted on the outer surface of said covering layer for advertising and promotion.

17. The apparatus as in Claim 15, wherein said front backing plate surface further defines an advertising portion thereon for advertising and promotion, said advertising portion being unobstructed by and extending beyond said platform and the size of said advertising portion being at least the size of said platform, and advertising or graphical material is imprinted on said advertising portion.

18. The apparatus as in Claim 12, wherein said message layer further has a protrusion formed at an edge thereof, said protrusion extending outwardly from said platform, whereby said message layer can rotate via said protrusion to selectively display said plurality of messages or spaces through said displaying window.

19. The apparatus as in Claim 4, wherein said backing plate further comprises at least one retaining member on at least one surface thereof for retaining writing instruments therein.

20. The apparatus as in Claim 2, where in said plurality of messages are erasable and rewritable.

21. A method comprising the steps of; preparing an apparatus for selectively displaying messages and removably retaining objects, said apparatus comprising:
a message displaying platform that can selectively display messages;
a backing plate pivotally connected with said platform via a connecting member, and
a resilient tension member disposed within said connecting member such that said tension member exerts force causing only one portion of edges of said bottom layer of said platform to contact against said front surface of said backing plate defining closed clipping jaws there between to retain sheets of paper or other objects, and said platform is disengageable from said front surface of said backing plate to define open clipping jaws so that said objects are released when pressure counteracting said force is applied to said platform; and imprinting advertising or graphical material upon one of the outer surfaces of said apparatus.
